# EUROPEAN PATENT APPLICATION

(11) **EP 4 852 253 A1**
(43) Date of publication of application: **09.12.2026**
(21) Application number: 26180425.6
(22) Date of filing: 21.05.2026
(51) Int. Cl.: H02H 3/087, H02H 3/06, H02H 5/04

(54) **SOLID-STATE FUSE FOR HIGH VOLTAGE AUTOMOTIVE LOADS**

(30) Priority: 02.06.2025 IN 202511053289
(71) Applicant: Eaton Intelligent Power Limited, Dublin D04 Y0C2 (IE)
(72) Inventor: Singh, Amitkumar, Farmington hills (US); Hiremath, Shivaprasad, Gadag (IN); Sullivan, Michael, Chelsea (US)
(74) Representative: Schwan Schorer & Partner mbB

(57) **Abstract**

A power electronics device is provided, wherein the power electronics device comprises a solid-state fuse having a semiconductor switch component, a gate driver coupled to the semiconductor switch component of the solid-state fuse, and a gate driver control circuit. The gate driver control circuit may be configured to detect a fault condition based on at least one of a sensed voltage and a temperature, control the gate driver to turn off the semiconductor switch component in response to detecting the fault condition, and control the gate driver to turn on the semiconductor switch component in response to receiving a reset signal.

## Description

### CROSS-REFERENCE TO RELATED APPLICATIONS

This application claims priority to India Provisional Patent Application No. 202511053289, filed June 2, 2025, the entire contents of which are hereby incorporated by reference herein.

### BACKGROUND

Aspects of the present invention relate generally to solid-state resettable fuses for high voltage automotive loads in electric vehicle applications.

Solid-state fuses are electronic protection devices that use semiconductor components instead of traditional metal elements to interrupt excessive current flow. Solid-state fuses often feature resettable functionality and are commonly used in sensitive electronics and automotive applications. Solid-state fuses began appearing in automotive applications as vehicle electronics became more complex.

### BRIEF SUMMARY

A solid-state fuse for high-voltage automotive loads is disclosed.

In a first aspect, there is provided a power electronics device comprising: a solid-state fuse comprising a semiconductor switch component; a gate driver coupled to the semiconductor switch component of the solid-state fuse; and a gate driver control circuit configured to: detect a fault condition based on at least one of a sensed voltage and a temperature, control the gate driver to turn off the semiconductor switch component in response to detecting the fault condition, and control the gate driver to turn on the semiconductor switch component in response to receiving a reset signal.

In another aspect, there is provided a method of protecting a high-voltage electrical load, the method comprising: monitoring at least one of a voltage and a temperature associated with current flowing through a semiconductor switch component of a solid-state fuse; detecting a fault condition based on at least one of the monitored voltage and the monitored temperature; in response to detecting the fault condition, controlling a gate driver to turn off the semiconductor switch component to interrupt current flow between a power source and a load; and in response to receiving a reset signal, controlling the gate driver to turn on the semiconductor switch component to restore current flow.

This Brief Summary introduces a selection of concepts in simplified form that are further described below in the Detailed Description. This Summary is not intended to identify key features or essential features of the claimed subject matter and is not intended to limit the scope of the claimed subject matter.

### BRIEF DESCRIPTION OF THE DRAWINGS

**FIG.** 1 illustrates an exemplary operating environment in accordance with aspects of the present invention.
FIG. 2 illustrates an exemplary operating environment in accordance with aspects of the present invention.
FIG. 3 illustrates an exemplary operating environment in accordance with aspects of the present invention.
FIG. 4 illustrates a circuit diagram of an exemplary operating environment in accordance with aspects of the present invention.
FIG. 5 illustrates a circuit diagram of an exemplary operating environment in accordance with aspects of the present invention.
FIG. 6 illustrates a circuit diagram of an exemplary operating environment in accordance with aspects of the present invention.
FIG. 7 illustrates a non-limiting exemplary vehicular environment in accordance with aspects of the present invention.

### DETAILED DESCRIPTION

A solid-state fuse for high-voltage automotive loads is described. Aspects of the present invention relate generally to solid-state resettable fuses for high voltage automotive loads in electric vehicle applications. Specifically, aspects of the present invention provide systems and methods for providing feedback mechanisms and diagnostics to analyze the condition of a solid-state fuse. According to aspects of the invention, the systems and methods may use analog and/or digital circuits to protect a solid-state fuse from overcurrent and over temperature and generate, in response to a fault condition associated with the overcurrent and/or over temperature, a fault signal that can be relayed to a vehicular battery monitoring system. According to aspects of the invention, the systems and methods may reset the solid-state fuse once the fault condition is cleared. According to aspects of the invention, the systems and methods may also protect bidirectional devices used for the solid-state fuse from desaturation.

Known systems and methods for protecting power electronic devices from overvoltage and/or overheating typically use sacrificial components such as melting fuses. These traditional workflows often involve manual intervention, delayed response times, and/or system downtime due to component replacement and/or reset procedures. Known systems and methods do not provide any feedback in case of a fault and do not therefore provide diagnostics to analyze condition of fuse and/or load. Furthermore, known systems and methods cannot be easily modified based on a customer demand. Rather, the fuse characteristics are based on the material used for the fuse element. Therefore, known systems suffer from the problem of limited adaptability, lack of fault transparency, and high maintenance burden, which reduce overall system reliability and responsiveness.

Implementations of the invention address this problem by providing a resettable protection system that uses solid-state switching, real-time monitoring, and integrated diagnostics to detect and respond to fault conditions such as overvoltage or overtemperature without requiring physical component replacement. Accordingly, implementations of the invention improve the technology field of power electronics and electrical safety systems by enabling adaptive, intelligent, and serviceable protection solutions that reduce downtime, improve safety, and support flexible system design tailored to user-specific requirements.

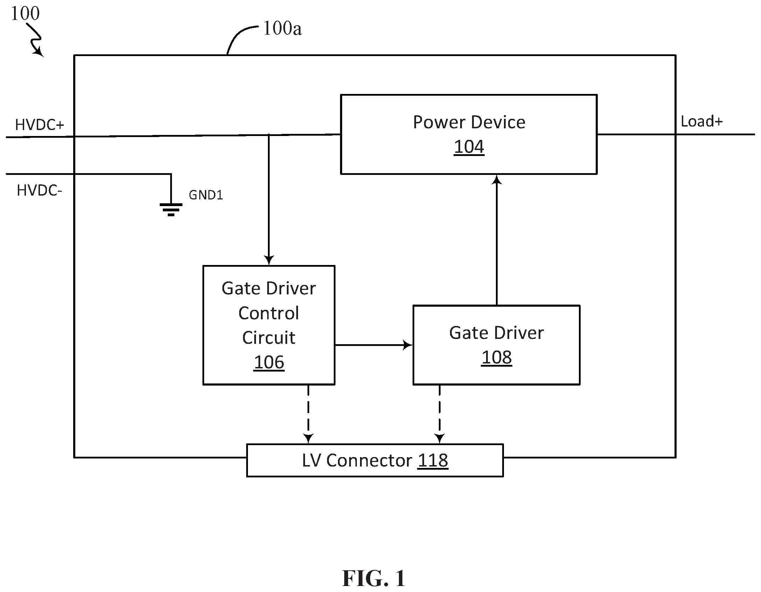

FIG. 1 illustrates an exemplary operating environment in accordance with aspects of the present invention. Referring to FIG. 1, operating environment 100 includes, among other features, High-Voltage Power Input and Output (e.g., HVDC+ and HVDC-) and a power electronics device 100a that includes: power device 104 (e.g., solid-state fuse), gate driver control circuit 106, gate driver 108 (i.e., gate driver circuit), and a low-voltage (LV) connector (i.e., an LV connector interface).

According to aspects of the invention, power device 104 (e.g., a solid-state fuse) may be operable to interrupt current flow in the event of an overcurrent, overtemperature, short-circuit condition, and/or any other fault condition. In embodiments, power device 104 comprises a semiconductor switch (e.g., a semiconductor switch component) that may turn off in response to detecting a fault condition (i.e., a fault in power). In embodiments, the semiconductor switch may turn on in response to receiving a reset signal.

The solid-state fuse of the power device 104 can be implemented as a power semiconductor switch such as but not limited to, a silicon carbide (SiC) transistor, an Insulated-Gate Bipolar Transistor (IGBT), a Metal-Oxide-Semiconductor Field-Effect Transistor (MOSFET), or any other high-speed power switch capable of controlling high current and voltage levels with low switching losses.

Gate driver control circuit 106 can be implemented in analog and/or digital circuitry, for example as a comparator control circuit and/or microcontroller. According to aspects of the invention, gate driver control circuit 106 may be configured to detect a fault (e.g., a fault condition) based on a detected overcurrent, over temperature, and/or other fault-inducing condition. In embodiments, when an overcurrent or overtemperature threshold is exceeded or another fault condition is detected, gate driver control circuit 106 may be configured to trigger gate driver 108 to disable power device 104 and activate a fault output through LV connector 118. In embodiments, when the fault condition is cleared, for example when a monitored voltage and/or current associated with the semiconductor switch component falls below a predetermined threshold value, the power device may be reset and/or enabled, and operations may be resumed. In this manner, operating environment 100 provides autonomous fault detection and recovery to protect critical power electronics and ensure continuous, reliable operation without manual intervention and without consuming and/or damaging the solid-state fuse.

In embodiments, the reset signal may be generated and/or accepted when a monitored voltage associated with the semiconductor switch component falls below a threshold voltage. In embodiments, the threshold voltage may correspond to a cleared-fault condition under which the gate driver control circuit may command the semiconductor switch component back to a conductive state.

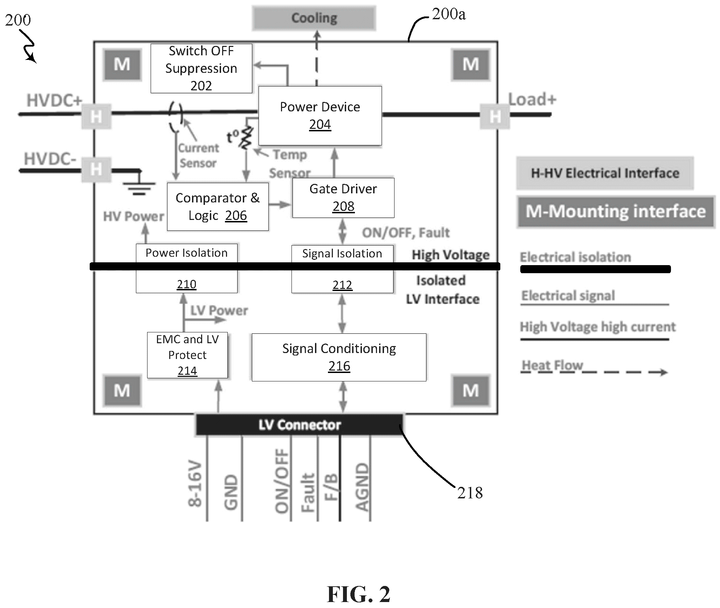

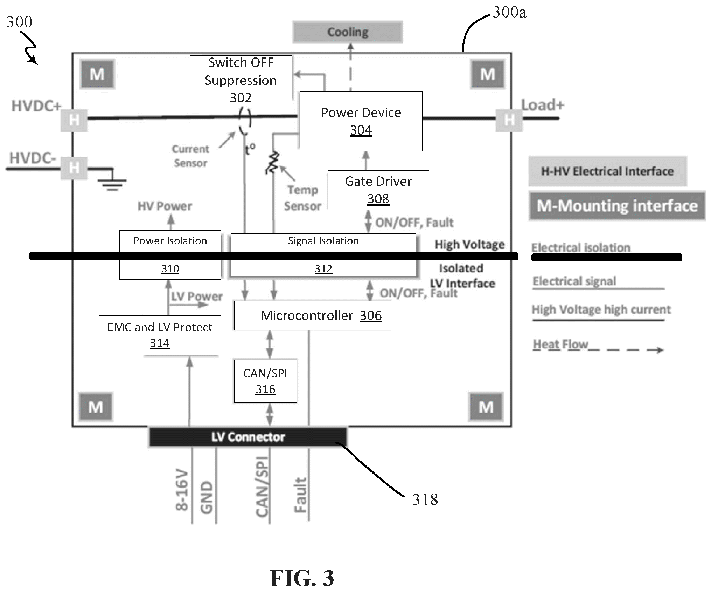

According to aspects of the invention, gate driver 108 may be configured to drive the gate of a power semiconductor switch implementing the solid-state fuse with precise timing, enabling efficient switching and rapid turn-off when protection thresholds are breached. In embodiments, operating environment 100 may include a switch OFF suppression mechanism which may be configured to ensure that voltage transients (e.g., inductive voltage spikes, transient peaks or overshoots, and/or drain-source voltage ringing) generated during a rapid turn-off event are dampened, thereby protecting the power device and connected load from electrical overstress. Example implementations incorporating a switch OFF suppression mechanism are shown in FIG. 2 and FIG. 3.

According to aspects of the invention, LV connector 118 may be configured to relay and/or generate a fault signal that includes diagnostic data that can be transmitted to a battery monitoring system for system-level fault analysis and/or preventative maintenance. In embodiments, LV connector 118 may be configured to receive a reset signal from a user (e.g., via a user device). In such embodiments, LV connector 118 may be further configured to relay the reset signal to gate driver control circuit 106 and/or gate driver 108.

FIG. 2 illustrates an exemplary operating environment in accordance with aspects of the present invention. Referring to FIG. 2, operating environment 200 includes, among other features, High-Voltage Power Input and Output (e.g., HVDC+ and HVDC-) and power electronics device 200a that includes: sensor integration and protection (e.g., current sensors and temperature sensors), power device 204 (e.g., a solid-state switch), switch OFF suppression circuit 202, comparator and logic circuit 206 (e.g., a gate driver control circuit), gate driver 208, signal isolation subsystem (e.g., a signal isolation circuit 212 and a power isolation circuit 210), electromagnetic compatibility (EMC) protection and low-voltage (LV) protection circuit 214, signal conditioning circuit 216, and LV connector 218 (e.g., a LV connector interface).

According to aspects of the invention, operating environment 200 includes power electronics device 200a that includes analog circuitry to protect power device 204 (e.g., a solid-state fuse) from overcurrent and over temperature and generates a fault signal that can be relayed to a battery monitoring system. As used herein, a fault signal refers to a control signal generated in response to an overcurrent or short-circuit condition, used to trigger protective actions such as activating a switching device to isolate the load. In embodiments, the fault signal may include data (e.g., temperature, voltage, current, etc.) for diagnostic purposes. For example, in the event of a fault condition, the analog circuit may generate a fault signal that includes diagnostic data that can be transmitted to the battery monitoring system for system-level fault analysis and/or preventative maintenance.

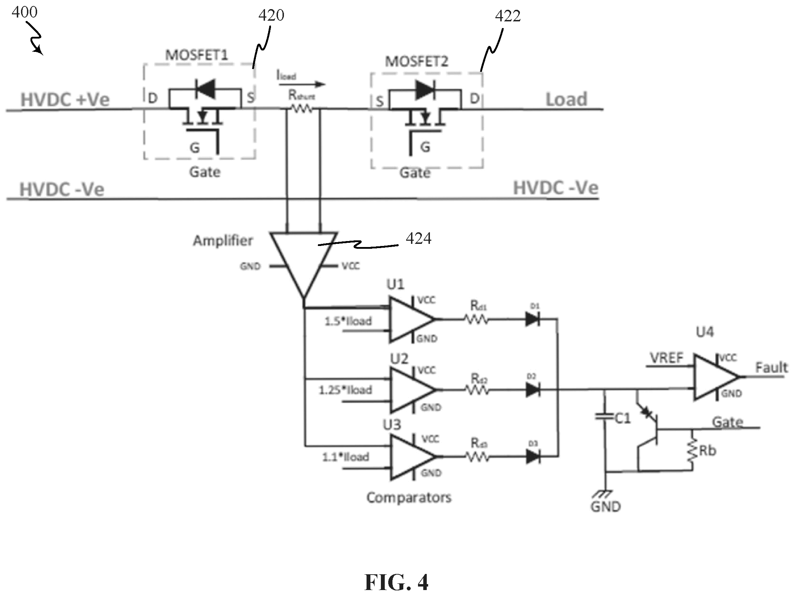

In embodiments, a current sensor and temperature sensor may be integrated into the power path of power electronics device 200a and are monitored by a comparator and logic circuit 206 (e.g., a gate driver control circuit). In some implementations, comparator and logic circuit 206 can be implemented as described with respect to FIG. 4. In embodiments, when an overcurrent or overtemperature threshold is exceeded or another fault condition is detected, the logic circuit 206 triggers gate driver 208 to disable power device 204 and activates a fault output through signal isolation subsystem 212 and LV connector 218. In embodiments, when the fault condition is cleared, power device 204 may be reset and/or enabled, and operations may be resumed. In this manner, operating environment 200 provides autonomous fault detection and recovery to protect critical power electronics and ensure continuous, reliable operation without manual intervention and without consuming and/or damaging the solid-state fuse.

In embodiments the gate driver 208 (i.e., gate drive circuit) is configured to drive the gate of a power semiconductor switch (e.g., silicon carbide (SiC) transistor, an Insulated-Gate Bipolar Transistor (IGBT), or Metal-Oxide-Semiconductor Field-Effect Transistor (MOSFET), and/or any other high-speed power switch capable of controlling high current and voltage levels with low switching losses) with precise timing, enabling efficient switching and rapid turn-off when protection thresholds are breached. In embodiments, power electronics device 200a may include a switch OFF suppression circuit 202 which may be configured to ensure that voltage transients (e.g., inductive voltage spikes, transient peaks or overshoots, and/or drain-source voltage ringing) generated during a rapid turn-off event are dampened, thereby protecting the power device and connected load from electrical overstress.

In embodiments, the signal isolation subsystem 212 includes both signal isolation and power isolation circuits. In such embodiments, these isolation components may be configured to maintain galvanic separation (i.e., electrical isolation with no direct conductive path) between the high-voltage domain and the low-voltage domain. In embodiments, signal isolation may be implemented using, for example, opto-isolators, digital isolators, or any other isolator capable of transmitting control signals while blocking high-voltage transients, to safely transfer ON/OFF commands, fault feedback, and/or control signals. In embodiments, power isolation circuit 210 may be configured to deliver low-voltage power across the isolation boundary without introducing a conductive path, using, for example, isolated DC-DC converters and/or any other isolator capable of providing regulated power with electrical separation between input and output domains.

In embodiments, EMC and LV protection circuit 214 and/or signal conditioning circuit 216 may be configured to receive commands and transmit system status through the LV connector 218. In such embodiment, the interface may include pins for ON/OFF control, fault signal output, forward/reverse (F/B) command, input power (+8V to +16V), ground reference (GND and AGND) and any other control, diagnostics, and/or communication signal that may be useful for system integration.

As used herein, diagnostics refers to the monitoring, reporting, and/or logging of system parameters and/or fault conditions that may provide insight into the operational state of the device. In embodiments, diagnostics may include real-time monitoring of parameters such as current, voltage, temperature, and fault status. These values may be processed onboard and/or transmitted through the connector interface to a processor, system controller, and/or a diagnostic tool. In embodiments, diagnostic outputs may include date describing overcurrent, overtemperature, undervoltage, and/or historical data for troubleshooting and predictive maintenance.

In embodiments, signal conditioning circuit 216 may be configured to ensure signal integrity, filter noise, and/or provide proper voltage levels for downstream control systems. In embodiments, EMC and LV protection circuit 214 may be configured to provide filtering, surge protection, and/or voltage regulation to prevent damage from electrical disturbances. In embodiments, EMC and LV protection circuit 214 may be used to mitigate both conducted and/or radiated electromagnetic interference (EMI). In such embodiments, this EMC protection may help ensure compliance with system-level EMC standards. In embodiments, EMC and LV protection circuit 214 may be used to safeguard the internal control circuitry against voltage anomalies such as spikes, transients, and/or reverse polarity.

In embodiment, operating environment 200 may further include defined mechanical and electrical interfaces for modular integration. For example, operating environment 200 may include a high-voltage electrical interfaces (H) to facilitate power connections. In embodiments, operating environment 200 may include a plurality of mounting interfaces (M) to enable mechanical attachment and/or thermal coupling for cooling. In such embodiments, thermal management may be supported by a heat flow pathway integrated into the housing or interface surface, allowing for either passive and/or active cooling strategies.

FIG. 3 illustrates an exemplary operating environment in accordance with aspects of the present invention. Referring to FIG. 3, operating environment 300 includes, among other features, high-voltage power input and output terminals (e.g., HVDC+ and HVDC-) and power electronics device 300a that includes: integrated sensor and protection elements (e.g., current sensor and temperature sensor), power device 304 (e.g., a solid-state switch and/or fuse), a switch OFF suppression circuit 302, gate driver 308, signal isolation subsystem (including both signal isolation circuit 312 and power isolation circuit 310), EMC and LV protection circuit 314, microcontroller 306 (e.g., a gate driver control circuit), control area network/serial peripheral interface (CAN/SPI) communication interface 316, and LV connector 318 interface (e.g., a LV connector interface).

According to aspects of the invention, operating environment 300 uses microcontroller 306 to safeguard power device 304 (e.g., a solid-state fuse) from overcurrent and overtemperature conditions, while also generating a fault signal suitable for transmission to a battery monitoring system. For example, current and temperature sensors may be placed in the power path of power electronics device 300a, and their outputs are monitored by microcontroller 306. When a protection threshold is breached, microcontroller 306 generates a fault signal that is routed through LV connector 318.

In embodiments, microcontroller 306 can implement a gate driver control circuit by receiving current and temperature information from the power path of power electronics device 300a and based on that information determining an amount of time to wait before directing the gate driver to trip the solid-state fuse to OFF/open. For example, the microcontroller 306 can have a lookup/comparison table that maps current values to length of time at which the current needs to be at that value before a signal to trip the solid-state fuse is sent. The software being executed at the microcontroller 306 can include instructions to detect a current value corresponding to a value or within a range of values in a table; start a timer upon detection of the current value and if the timer reaches the specified time to wait while the current value is at the value or within the range of values in the table, trigger a command to the gate driver to turn off the solid-state fuse. In some cases, the amount of time to wait decreases as the current values increase. As will be apparent, the digital implementation of the gate driver control circuit can operate similarly to the analog implementation, but with a potential for more granularity that can easily be programmatically implemented.

In embodiments, the fault signal may include data (e.g., temperature, voltage, current, etc.) for diagnostic purposes. For example, in the event of a fault condition, microcontroller 306 may generate a fault signal that includes diagnostic data that can be transmitted to the battery monitoring system for system-level fault analysis and/or preventative maintenance. In embodiments, once the fault condition is cleared, the system may reset and re-enable the power path. Operating environment 300 provides autonomous protection and recovery capabilities to safeguard connected power electronics while maintaining operational continuity-without manual reset and without consuming or damaging the solid-state fuse.

In embodiments, gate driver 308 is configured to control a power semiconductor switch (e.g., SiC transistor, an IGBT, a MOSFET, and/or any other high-speed, high-efficiency power switch capable of operating under high current and voltage with low switching losses). As noted above, gate driver 308 provides precise timing for enabling and disabling the switch, ensuring efficient operation. In some embodiments, power electronics device 300a also includes switch OFF suppression circuit 302 which may be configured to ensure that voltage transients (e.g., inductive voltage spikes, transient peaks or overshoots, and/or drain-source voltage ringing) generated during a rapid turn-off event are dampened, thereby protecting the power device and connected load from electrical overstress.

In embodiments, gate driver 308 may control switching of the power semiconductor switch arrangement for current flow in either direction between a power source and a load. In embodiments, the gate driver 308 may support bidirectional current flow during normal operation and may turn off the power semiconductor switch arrangement to interrupt current flow in response to a detected fault condition.

The signal isolation subsystem of operating environment 300 includes two distinct types of isolation: power isolation circuit 310 and signal isolation circuit 312. Like above, these circuits are configured to maintain galvanic isolation, that is, electrical separation without a direct conductive path, between the high-voltage and low-voltage domains. As noted above with respect to operating environment 200 of FIG. 2, in embodiments, signal isolation circuit 312 may be implemented using, for example, opto-isolators, digital isolators, or any other isolator capable of transmitting control signals while blocking high-voltage transients, to safely transfer ON/OFF commands, fault feedback, and/or control signals. In embodiments, power isolation circuit 310 may deliver low-voltage power across the isolation boundary without introducing a conductive path, using, for example, isolated DC-DC converters and/or any other isolator capable of providing regulated power with electrical separation between input and output domains.

In embodiments, EMC and LV protection circuit 314 and/or signal conditioning circuit 316 may be configured to receive commands and transmit system status through the LV connector 318. In such embodiment, the interface may include pins for ON/OFF control, fault signal output, input power (+8V to +16V), ground reference (GND), digital communication (e.g., CAN/SPI), and/or any other control, diagnostic, and/or communication signal that may be useful for system integration. In embodiments, EMC and LV protection circuit 314 is configured to provide protection against voltage anomalies and electromagnetic disturbances. It may include filters, clamping devices, and polarity protection to ensure the stability and safety of low-voltage control electronics. In embodiments, EMC and LV protection circuit 314 may be designed to attenuate both conducted and radiated electromagnetic interference (EMI), supporting compliance with automotive or industrial EMC standards.

In embodiments, operating environment 300 also includes defined mechanical and electrical interfaces for modular integration. For example, operating environment 300 may include a high-voltage electrical interface (H) to facilitate power connections. In embodiments, operating environment 300 may include a plurality of mounting interfaces (M) to enable mechanical attachment and/or thermal coupling for cooling. In such embodiments, thermal management may be supported by a heat flow pathway integrated into the housing or interface surface, allowing for either passive and/or active cooling strategies.

In embodiments, microcontroller 306 may be configured to perform system-level monitoring, decision-making, and/or communication functions. For example, in embodiments, microcontroller 306 may receive sensor data (e.g., temperature and current feedback), interpret control inputs (e.g., ON/OFF commands and/or fault condition indications), and issue control signals to gate driver 308. Additionally, in embodiments, microcontroller 306 may manage fault detection logic, interface with the signal isolation subsystem, and/or facilitate communication with external systems via CAN/SPI communication interface 316. In some embodiments, microcontroller 306 may be programmed to implement state machines, firmware-based safety protocols, and/or diagnostics for logging fault conditions, initiating retries, and/or engaging recovery mechanisms as required.

In embodiments, CAN/SPI communication interface 316 may be configured to enable robust and reliable data exchange between the microcontroller and external supervisory systems, such as a battery management system (BMS), vehicle control unit (VCU), and/or other host controllers. In such embodiments, CAN/SPI communication interface 316 may be used for real-time communication in automotive and/or industrial environments, supporting fault-tolerant, multi-node communication on a shared bus. In embodiments, CAN/SPI communication interface 316 may be used for high-speed, short-distance communication between the microcontroller and/or peripheral components or modules within the device. In such embodiments, these interfaces may support the transmission of control commands, operational status, fault codes, diagnostic data, and/or system telemetry, allowing for integration into broader system architectures and supporting predictive maintenance, remote diagnostics, and/or centralized monitoring functions.

FIG. 4 shows a circuit diagram of an exemplary operating environment 400 in accordance with aspects of the present invention. Features and operations performed by the features of operating environment 400 are described with reference to elements and features depicted in and described with reference to FIGS. 1-2. Specifically, operating environment 400 may include one or more instances of comparator and logic circuit 206 of FIG. 2, therefore the descriptions and embodiments of comparator and logic circuit 206 may, in some embodiments, also apply to operating environment 400.

In embodiments, analog circuits may be used to detect an overcurrent event. In such embodiments, the analog circuits may include more than one tripping point (i.e., more than one detection point). As illustrated, operating environment 400 includes two power MOSFETs (e.g., MOSFET1 420 and MOSFET2 422), comparators (e.g., U1, U2, and U3), Resistors (e.g., Rd1, Rd2, and Rd3), at least one capacitor (e.g., C1), and diodes are used to detect the overcurrent at different current levels.

In embodiments, different comparators may be assigned to different current thresholds so that different tripping points are available for the same load path. In embodiments, each current threshold may correspond to a different fraction and/or multiple of the load current used for protection of the power electronics device.

As illustrated, in embodiments, operating environment 400 may include two power MOSFETs (e.g., MOSFET1 420 and MOSFET2 422) connected in series with the load between the HVDC positive and negative rails. The source of MOSFET1 420 connects to the HVDC positive voltage (HVDC+ve), and the drain connects to an amplifier input through a current-sensing resistor (e.g., Rshunt). MOSFET2 422 is similarly arranged with its drain connected to the load and its source to the HVDC negative voltage (HVDC-ve). In embodiments, the MOSFETS may be configured to operate as a high-side and low-side switch pair to enable controlled isolation of the load from the power source during fault conditions. In this configuration the two MOSFETS may be used to detect overcurrent in both directions, meaning, operating environment 400 may detect an overcurrent flowing from the source to the load and from the load to the source. This is important because bidirectional current flow can occur in regenerative systems, such as electric vehicles and/or hybrid architectures, where energy may flow back from the load (e.g., motor and/or inverter) into the power supply, which may cause damage to power supply components, unintended activation of protective devices, and/or unsafe voltage levels on shared power buses. Detecting overcurrent in both directions ensures comprehensive protection of system components, prevents reverse energy faults, and enables safe operation during dynamic load conditions such as braking, fault recovery, and/or power regeneration.

In embodiments, the amplifier receives the voltage across the current-sensing resistor (e.g., Rshunt), producing an amplified signal proportional to the load current (Iload). This amplified signal is fed into a bank of three comparators (e.g., U1, U2, U3), each referenced to a different fraction of the nominal load current: U1 compares against 1.5 × Iload, U2 compares against 1.25 × Iload, and U3 compares against 1.1 × Iload. In embodiments, more comparators may be used based on the specific needs and/or functions of the vehicle. For example, if a vehicle's air conditioning unit ran at 1.3 x Iload, U2 would be too small and U3 would be too large, therefore, another comparator (not shown) may be installed and compared against 1.3 x Iload. In embodiments, and as illustrated, each comparator output may be protected with a diode to prevent reverse currents. Accordingly, operating environment 400 may provide a changing trip point and delay based on customer requirement. This is important because it allows the overcurrent protection system to be tailored to the specific electrical characteristics and operational profiles of different vehicle components, improving both safety and performance while reducing the likelihood of nuisance tripping or delayed fault response under varying load conditions.

In embodiments, each comparator may receive the amplified signal representative of load current and may compare that signal against a respective threshold corresponding to a fraction and/or multiple of a reference load current. In embodiments, the reference load current may correspond to a nominal load current, a rated load current, and/or another expected operating current for the load.

In embodiments, the comparator bank may be used to implement multiple protection levels for the same device. In embodiments, a first comparator may correspond to a first threshold and delay, a second comparator may correspond to a second threshold and delay, and a third comparator may correspond to a third threshold and delay, such that detection behavior may be selected according to the magnitude and duration of the sensed condition.

In embodiments, outputs of the comparators are logically combined and input into a fault detection amplifier (U4). The fault detection amplifier monitors for fault conditions based on the comparator outputs and triggers a fault signal if a predetermined threshold (e.g., VREF) is exceeded. In embodiments, the threshold may be determined based on the characteristics and/or specifications of the of the load and/or power supply system, to ensure that the fuse does not trip unnecessarily during normal transient conditions but does trip promptly in response to actual overcurrent events. For example, when the amplifier output voltage is greater than the set threshold value of the reference voltage of the respective comparators, it will provide high output voltage and timing delays are adjusted for the corresponding load current using resistors Rd1, Rd2, and Rd3, and capacitor C1 based on the fuse's I2t characteristics. For example, a fuse rated at 100 A2s might survive 10A for 1 second or 100A for 0.01 seconds.

In embodiments, a first comparator of the plurality of comparators may be associated with a first threshold corresponding to a first fraction and/or multiple of the load current. In embodiments, a fault condition may be declared when the sensed voltage representative of current exceeds the first threshold for a predetermined time associated with the first comparator.

In embodiments, a fault condition may be detected when a sensed voltage representative of current exceeds the threshold associated with one of the comparators for a predetermined time. In embodiments, the predetermined time may be set by a corresponding resistor-capacitor timing network and may vary with the threshold associated with the comparator.

In embodiments, the gate of a switching device is controlled by the output of U4. In such embodiments, when a fault condition is detected, the switching device is activated to isolate the load, thereby protecting the circuit from overcurrent and/or short-circuit conditions. In embodiments, the transistor prevents the overcurrent circuit from falsely triggering due to noise or residual voltages. In embodiments, the transistor may pull down and/or isolates part of the sensing circuit to avoid interference. Furthermore, in embodiments, the transistor may discharge the C1 capacitor when the gate is turned OFF. In such embodiments, operating environment 400 can detect the overcurrent bidirectionally (e.g., in both directions-current flowing from source to load and from the load to the source). When the fault condition is no longer present (i.e., no longer detected), the device may be switched back on (e.g., reset). In known fuse technologies, when a higher current than rated flows through a fuse, the fuse element heats up and melts, thereby disconnecting the circuit and protecting load and cable from overcurrent. In such known technologies, the melted fuse is destroyed and/or no longer useable and must be replaced. Therefore, the foregoing resettable protection mechanisms are an improvement because the system may automatically resume normal operation once the fault condition is cleared without requiring physical replacement of components.

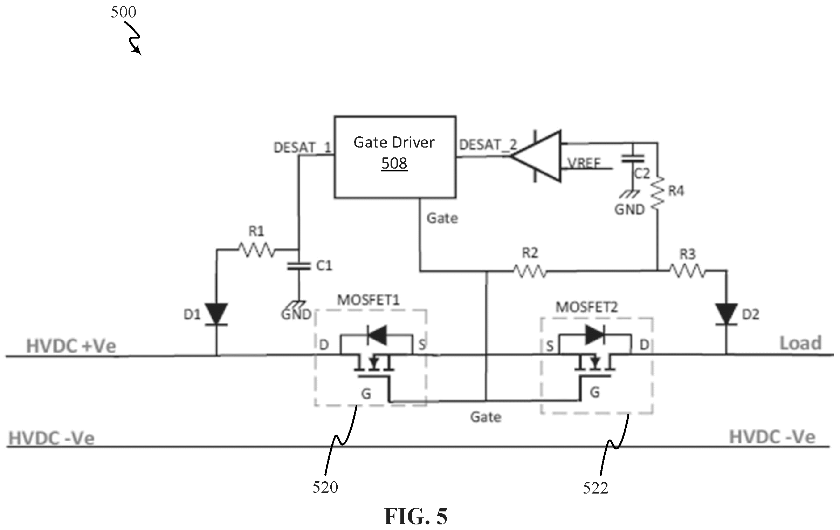

FIG. 5 shows a circuit diagram of an exemplary operating environment 500 in accordance with aspects of the present invention. Features and operations performed by the features of operating environment 500 are described with reference to elements and features depicted in and described with reference to FIGS. 1-3. Specifically, operating environment 500 may include one or more instances of gate driver 208 of FIG. 2 and/or gate driver 308 of FIG. 3, therefore the descriptions and embodiments of gate driver 208 and/or gate driver 308 may, in some embodiments, also apply to operating environment 500.

In embodiments, operating environment 500 comprises gate driver 508 to protect bidirectional power devices during a short circuit event. In such embodiments, operating environment 500 may operate as a desaturation (i.e., "desat") circuit, meaning it may be used to detect when a power switch enters a fault condition, such as short circuit or overcurrent. In embodiments, during short circuit conditions, excess current will flow through the power devices of operating environment 500, exceeding their rated current. In such embodiments, this will increase the voltage drop across the power devices in accordance with their Vds Vs Ids characteristics (i.e., how the drain-to-source voltage of a MOSFET changes in response to the drain current, under different gate drive conditions). In embodiments, a trip point can be set using at least one resistor, at least one diode, and at least one capacitor that will turn off a power device in response to detecting a desaturation of the device. In embodiments, gate driver 508 and analog circuitry protects bidirectional high-voltage devices and/or products.

In embodiments, operating environment 500 may include resistors, diodes, at least one operational amplifier (i.e., op-amp), and blanking capacitor (i.e., a capacitor used to implement a time delay during which certain signals or operations are ignored and/or suppressed to prevent false triggering and/or undesired behavior). As illustrated, when current flows from a battery (e.g., HVDC +Ve) to load, a MOSFET (e.g., MOSFET1 520) conducts the current in a forward direction. In such scenarios, diode D1 may be forward biased, diode D2 may be reverse biased, and the standard desat circuit (e.g., DESAT_1) of and/or from the gate driver integrated circuit (IC) is active. Accordingly, the desaturation detection circuit (DESAT_1) monitors the drain-to-source voltage of MOSFET1 520 to ensure it remains in saturation and will trigger a fault if the voltage rises above a predefined threshold, indicating a potential short-circuit and/or overcurrent condition.

As illustrated, when current flows from a load to a battery, a MOSFET (e.g., MOSFET2 522) conducts current in a forward direction. In such scenarios, diode D2 may be forward biased, diode D1 may be reverse biased, the standard desat circuit (e.g., DESAT_1) of and/or from the gate driver IC is inactive, and a discrete desat circuit (e.g., DESAT_2) is active. Accordingly, the discrete desaturation circuit (DESAT_2), when active, monitors the condition of MOSFET2 522 to detect fault events such as overcurrent and/or reverse conduction anomalies. Whenever a short circuit condition occurs, one of the circuits are activated, based on the direction of the current, to turn off the MOSFET.

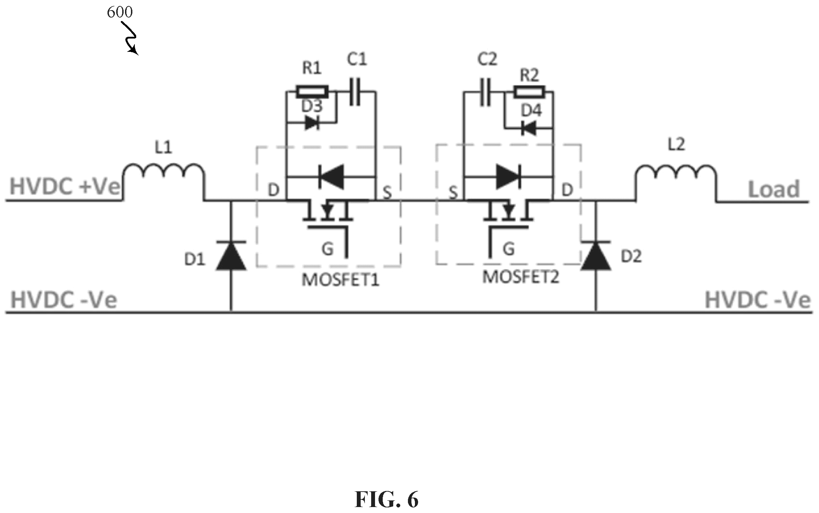

FIG. 6 shows a circuit diagram of an exemplary operating environment 600 in accordance with aspects of the present invention. Features and operations performed by the features of operating environment 600 are described with reference to elements and features depicted in and described with reference to FIGS. 1-3. In addition, aspects of operating environment 600 can be incorporated into operating environment 400 and operating environment 500.

In embodiments, operating environment 600 comprises resistors, capacitors, and diodes that may be configured to suppress an induced voltage across a power device during a turn off state. In embodiments, operating environment 600 may be used in solid-state battery disconnect unit (BDU) applications such as electric vehicles, energy storage systems, aerospace systems, and more. In such embodiments, inductance may be present in the source side (e.g., battery wire inductance) and/or in the load side (e.g., load inductance). During an "on" state of power devices energy may be stored in/at both the load side and the source side. In embodiments, when turning off a switch (e.g., turning off the power), the stored energy may induce the voltage across the power devices. In such embodiments, the stored energy may be dissipated through a resister-capacitor-diode (RCD) snubber circuit and/or through a freewheeling diode. This is beneficial because it helps safely manage and dissipate the inductive energy, which might otherwise cause damaging voltage spikes across the power switching devices. Preventing such voltage spikes may preserve and/or lengthen the lifespan of a MOSFET.

As illustrated, in embodiments where current flows from a battery (e.g., HVDC +ve) to a load through (i.e., via) inductor L1, MOSFET1, body diode (e.g., D4) of MOSFET2, inductor L2, the load, and back to HVDC -ve, the energy in operating environment 600 may be stored in inductor L1 and/or inductor L2. In such embodiments, when the MOSFET1 is turned off, the energy stored in inductor L1 may be stored in capacitor C1 through diode D3. In such embodiments, capacitor C1 may discharge this energy through resistor R1 in a next turn on cycle. In embodiments, the energy stored in inductor L2 at the load side may be freewheeled through diode D2.

As illustrated, in embodiments where current flows from a load to a battery (e.g., HVDC +ve ), through (i.e., via) inductor L2, MOSFET2, body diode (e.g., D3) of MOSFET2, inductor L1, battery (e.g., HVDC +ve ), and back to HVDC-ve, the energy in operating environment 600 may be stored in inductor L1 and/or inductor L2. In such embodiments, when the MOSFET2 is turned off, the energy stored in inductor L2 may be stored in capacitor C2 through diode D4. In such embodiments, capacitor C2 may discharge this energy through resistor R2 in a next turn on cycle. In embodiments, the energy stored in inductor L1 at the source side may be freewheeled through diode D1.

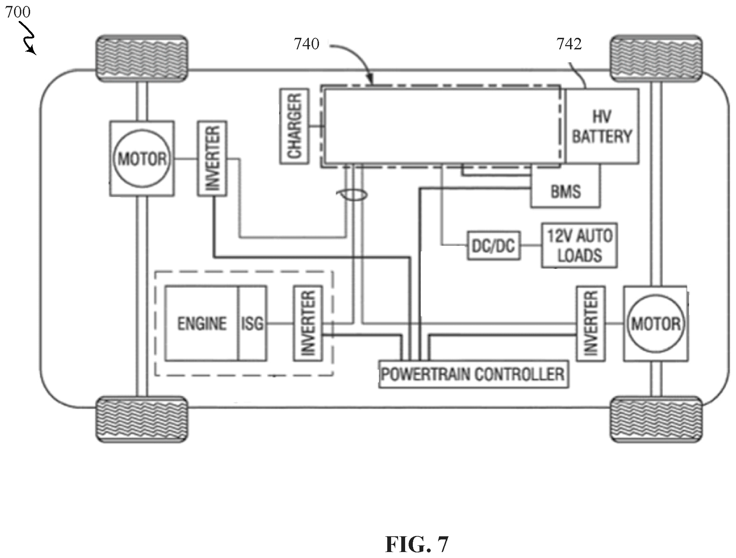

FIG. 7 illustrates a non-limiting exemplary vehicular environment 700 in accordance with aspects of the present invention. The exemplary vehicular environment 700 includes the high voltage battery 742 electrically coupled to high voltage loads through a power distribution unit (PDU) 740. In embodiments, PDU 740 may comprise one or more instances of the exemplary operating environments 100-600 of FIGS. 1-6, respectively. Accordingly, the embodiments and descriptions of operating environments 100-600 may additionally apply to vehicular environment 700.

In embodiments, the high voltage battery 742 and/or an auxiliary prime mover may act as a power source and/or a load during certain operating conditions of vehicular environment 700, and additionally high voltage loads (e.g., electric motors or motor-generators coupled to the wheels) may act as a load and/or a source during certain operating conditions. For example, the high voltage battery 742 may operate as a power source during motive operations where net energy is being taken from the battery, and/or as a load during charging operations, motive operations where the wheels or auxiliary prime mover are charging the battery, etc.

In embodiments, motive systems such as vehicular environment 700 may experience highly transient load cycles-for example during acceleration, deceleration, stop-and-go traffic, emergency operations, and the like-and accordingly management of power in such system is complex, and certain devices such as fuses can be vulnerable to the highly transient load cycle. Additionally, or alternatively, loss of operations for vehicles can result in costs for system downtime, loss or untimely delivery of cargo, and/or significant operational risks due to failures (e.g., stranding the operator and/or vehicle, loss of operations in traffic, loss of operations on a motorway, etc.). In certain embodiments, other systems that may be hybrid electric and/or fully electric are additionally or alternatively subject to highly variable duty cycles and/or specific vulnerabilities to operational interruptions, such as, without limitation, pumping operations, process operations for a larger process (e.g., chemical, refining, drilling, etc.), power generation operations, mining operations, and the like. System failures for these and other operations may involve externalities such as losses associated with the process failure that go beyond the down-time for the specific system, and/or down-time for such systems can incur a significant cost.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts that would be recognized by one skilled in the art are intended to be within the scope of the claims.

## Claims

1. A power electronics device, comprising:
a solid-state fuse comprising a semiconductor switch component;
a gate driver coupled to the semiconductor switch component of the solid-state fuse; and
a gate driver control circuit configured to:
detect a fault condition based on at least one of a sensed voltage and a temperature,
control the gate driver to turn off the semiconductor switch component in response to detecting the fault condition, and
control the gate driver to turn on the semiconductor switch component in response to receiving a reset signal.

2. The power electronics device according to claim 1, wherein the gate driver control circuit comprises a plurality of comparators configured to compare a signal representative of current flowing through the power electronics device against respective thresholds corresponding to fractions and/or multiples of a reference load current.

3. The power electronics device according to claim 2, wherein the fault condition is detected based on a sensed voltage representative of current exceeding one of the respective thresholds for a predetermined time.

4. The power electronics device according to claim 2, wherein each comparator of the plurality of comparators is configured to compare the signal representative of current against a different threshold corresponding to a different fraction and/or multiple of the reference load current.

5. The power electronics device according to claim 4, wherein a fault condition is detected based on a sensed voltage representative of current exceeding a first threshold associated with a first comparator of the plurality of comparators for a predetermined time associated with the first comparator.

6. The power electronics device according to any one of claims 1 to 5, wherein the reset signal is received in response to a user input.

7. The power electronics device according to any one of claims 1 to 5, wherein the reset signal is received in response to detecting that a monitored voltage associated with the semiconductor switch component falls below a threshold voltage.

8. The power electronics device according to any one of claims 1 to 7, wherein the gate driver comprises a bidirectional desaturation circuit.

9. The power electronics device according to claim 8, wherein the bidirectional desaturation circuit comprises:
a first MOSFET configured to conduct a current in a first direction;
a first desaturation circuit inline between the gate driver and the first MOSFET;
a second MOSFET configured to conduct the current in a second direction, wherein the first direction and the second direction are different; and
a second desaturation circuit inline between the gate driver and the second MOSFET.

10. The power electronics device according to claim 9, wherein the first direction comprises a direction from a power source to a load, and the second direction comprises a direction from a load to a power source.

11. The power electronics device according to any one of claims 1 to 10, wherein the gate driver controls switching of the semiconductor switch component for current flow in either direction between a power source and a load.

12. The power electronics device according to any one of claims 1 to 11, wherein the gate driver control circuit is further configured to generate a fault signal comprising diagnostic data for transmission to a battery monitoring system for fault analysis.

13. The power electronics device according to claim 12, wherein the gate driver control circuit comprises a microcontroller.

14. A method of protecting a high-voltage electrical load, comprising:
monitoring at least one of a voltage and a temperature associated with current flowing through a semiconductor switch component of a solid-state fuse;
detecting a fault condition based on at least one of the monitored voltage and the monitored temperature;
in response to detecting the fault condition, controlling a gate driver to turn off the semiconductor switch component to interrupt current flow between a power source and a load; and
in response to receiving a reset signal, controlling the gate driver to turn on the semiconductor switch component to restore current flow.

15. The method according to claim 14, further comprising comparing a signal representative of current flowing through the semiconductor switch component to a plurality of threshold values using a plurality of comparators, each threshold value corresponding to a fraction and/or multiple of a reference load current.
